# EUROPEAN PATENT SPECIFICATION

(11) **EP 3 753 972 B1**
(45) Date of publication and mention of the grant of the patent: **29.07.2026**
(21) Application number: 20178977.3
(22) Date of filing: 09.06.2020
(51) Int. Cl.: C08H 1/00, C08L 89/00, C08J 3/24, A44B 1/02

(54) **CASEIN CROSS-LINKING PROCESS AND CASEIN-DERIVED CROSS-LINKED POLYMERIC MATERIAL**
KASEINVERNETZUNGSVERFAHREN UND KASEINABGELEITETES VERNETZTES POLYMERMATERIAL
PROCÉDÉ DE RÉTICULATION DE CASÉINE ET MATÉRIAU POLYMÈRE RÉTICULÉ DÉRIVÉ DE CASÉINE

(30) Priority: 17.06.2019 IT 201900009246
(43) Date of publication of application: 23.12.2020
(73) Proprietor: Bottonificio Lenzi 1955 S.r.l., 40030 Castel di Casio (BO) (IT)
(72) Inventor: LENZI, Davide, 40030 Castel di Casio (BO) (IT); LENZI, Luca, 40030 Castel di Casio (BO) (IT); CIARDELLI, Francesco, 56124 Pisa (IT); RIOLO, Stefano, 56124 Pisa (IT)
(74) Representative: Marchi, Paolo

(56) References cited:
- CN-A- 107 446 094
- GB-A- 224 672
- GB-A- 259 418
- GB-A- 630 150

## Description

This invention relates to a casein cross-linking process for obtaining a polymeric material, as well as to a casein-derived cross-linked polymeric material.

A known process for obtaining a casein-derived polymeric material by means of free radical polymerization is disclosed for example in CN 107446094 A, but it differs from this invention and it does not have the same purpose as this invention, because CN 107446094 A relates to a sticky protein hydrogel to be used in the fields of drug controlled release, drug dressings and the like.

This invention has a specific application in the sector of production of buttons for items of clothing, however, it may also be applied in other sectors and for making many articles which are different from a button.

At the end of the nineteenth century processes were developed to obtain a rigid material, with an appearance similar to horn, using casein as the starting material. Examples of these processes are described in British patent No. GB 24742 of 1897 and in British patent No. GB 1221 of 1901. That material became commercially known under the name "Lactoform" or "Galalith". Hereinafter in this description, the term "Galalith" therefore refers to said rigid material derived from casein.

Galalith was very successful and widely used for several decades (see also British patent No. GB 224,672 of 1924, British patent No. GB 259,418 of 1926, and British patent No. GB 630,150 of 1949), after which the development and gradual success of synthetic resins derived from petroleum products greatly reduced the use of this casein-derived material.

Although petroleum-derived resins completely ousted Galalith in many sectors, Galalith has kept being applied in specific sectors. For example, thanks to its favourable aesthetic and mechanical properties, Galalith continues to be a material very highly valued in making buttons for items of clothing, in particular for medium-high and high fashion clothing ranges.

However, Galalith technology (or that of similar casein-based materials) has a drawback linked to its production process: after the casein has been shaped in a mould, the object obtained in this way must be kept in a formaldehyde bath (that is to say, in an aqueous solution of formaldehyde) in order to activate a cross-linking process which therefore hardens the casein.

In recent decades, formaldehyde toxicity and the hazards which it may cause to human health have been investigated and substantially confirmed.

Therefore the need to use formaldehyde in the Galalith production process is a serious drawback. Since formaldehyde is a health hazard for production workers, the necessary technical measures must be taken in order to reduce the related risks, with the consequent costs.

This is one of the reasons why Galalith has been further ousted by synthetic resins derived from petroleum products, even in the specific sectors where the use of Galalith remained valid and highly valued.

However, at the same time, in general there is growing interest in materials derived from renewable resources rather than fossil resources, with a view to reducing the environmental impact of industrial products. The subject of product environmental friendliness is increasingly important to consumers and must be given due consideration by manufacturers.

Added to that is the fact that, for example in the sector of buttons for items of clothing, the aesthetic properties of a Galalith product have still not be matched by petroleum-derived synthetic resin products.

Thus, there are valid reasons which make a protein-derived polymeric material, such as Galalith which is derived from casein, preferable and more interesting than a petroleum-derived resin.

The inventors of this invention therefore set themselves the aim of providing a process which, starting from casein and without using formaldehyde (or other aldehyde or dialdehyde), would enable a cross-linked polymeric material with mechanical properties similar to those of Galalith to be obtained. The inventors, in particular, focused their attention on a material which would be suitable to be used for making buttons for items of clothing.

One requirement for the material is to be substantially rigid and mechanically workable by cutting, milling, turning and drilling.

The technical purpose and the aims indicated are substantially achieved by a process as described in the appended claims.

In addition to that process, this invention also relates to a casein-derived cross-linked polymeric material, obtainable according to the process, and products made of said material, in particular buttons for items of clothing. Examples of articles made of said material which are subject-matter of this invention are: buttons; clasps; buckles; small plates; knot covers; string stoppers; handles; zip pulls; eyelets; spectacle frames; other articles in the fashion sector.

The term "casein" refers to a family of proteins which are present in fresh milk and which contain phosphoric groups. Such proteins have a high molecular mass (of around 20,000 Daltons) and therefore hereinafter casein proteins will be indicated as "casein macromolecules". Basically, casein is a mixture of such proteins.

One aspect forming the basis of this invention is mixing of the casein with water and with a suitable cross-linking agent which, when brought to a reaction temperature, promotes formation of bonds between casein macromolecules. Whilst in the Galalith production process the hardening agent (that is to say, the formaldehyde) is dissolved in a bath in which the ready-formed product is immersed for hardening, in the process according to the invention the cross-linking agent is added to the casein when the latter is still in a loose state. Therefore the cross-linking agent can be thoroughly mixed with the casein macromolecules, so that the cross-linking agent is homogeneously distributed amongst the macromolecules and, when activated by the temperature, promotes formation of a homogeneous cross-linked structure. Thanks also to the chemical reaction which differs from that involving formaldehyde, this invention avoids the need for a hardening bath and does not require the use of formaldehyde (or other aldehyde or dialdehyde).

In order to promote a cross-linking which gives a rigid and compact product, the cross-linking is carried out while the mixture of casein, water and cross-linking agent is kept subject to pressing, for example at pressures greater than 20 bar and in particular at pressures of 150 bar or more.

According to the invention, compounds which generate free radicals, in particular through heating, have been identified as cross-linking agent. Such compounds, for example peroxides or persulphates, allow crosslinks between casein macromolecules to be created by abstracting hydrogen atoms from the casein macromolecules by means of free radicals coming from the compounds themselves, which therefore create radicals on the macromolecular chains of the proteins. The subsequent reaction combining two protein radicals causes an inter-chain bond which, being repeated, results in the formation of a cross-linked structure. Essentially, if only cross-linking agents in this class are used, the polymeric material obtained is formed by casein macromolecules which are directly bonded to each other.

Moreover, it has been identified a possibility of using, in combination with the free-radical generating compounds, also a cross-linking agent which is an epoxide compound having two or more epoxide groups. Amongst these, neopentyl glycol diglycidyl ether and bisphenol A diglycidyl ether have been identified in particular.

When using an epoxide compound as a second cross-linking agent, further crosslinks between casein macromolecules are created by reaction with the epoxide compound itself, which bonds to the casein macromolecules and therefore remains incorporated in the cross-linked structure.

The use of an epoxide compound in combination with a free-radical generating compound allows a greater possibility for varying the cross-linking process and therefore allows modulation of the mechanical properties of the material obtained.

The length and the type of the bonds between the casein macromolecules may be modified using cross-linking agents with a different structure and/or mixtures of cross-linking agents.

Further features and the advantages of this invention will be more apparent from the detailed description of several preferred, non-limiting embodiments of a casein cross-linking process.

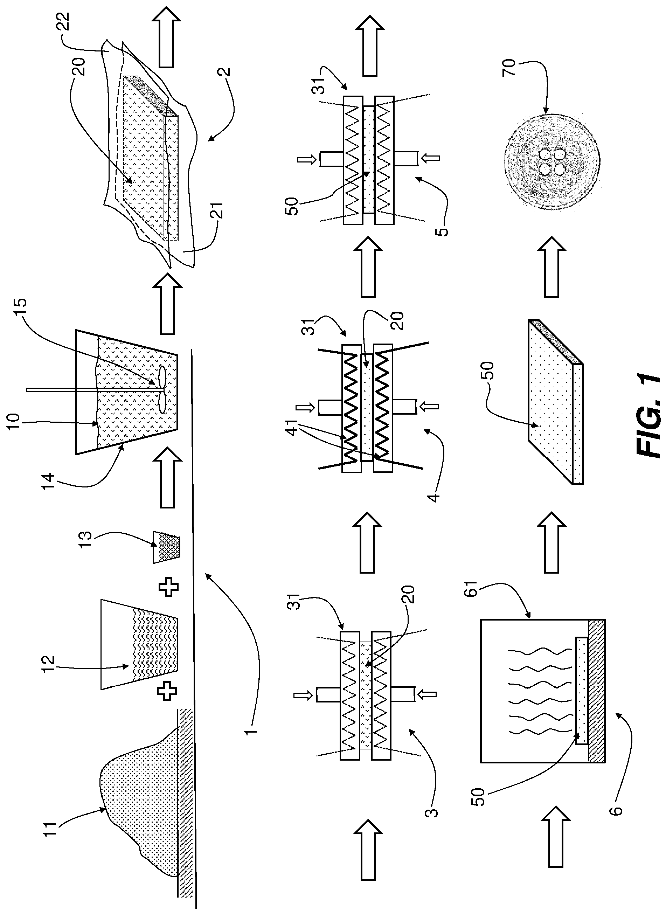

Reference will be made to the accompanying Figure 1, which schematically illustrates the steps of an example of the process according to this invention. This detailed description presents the results of the experiments carried out by the inventors and the processes which were developed in order to make a casein-derived cross-linked polymeric material. Specifically, the material obtainable by such processes is a substantially rigid material, which is mechanically workable by cutting, milling, turning and drilling.

In general, the processes according to this invention comprise in the following order:
- a step of mixing (powdered) casein with water and with and at least one cross-linking agent. In this step, the water and the cross-linking agent are absorbed by the powdered casein and what is obtained is a mixture having a pasty consistency, practically a paste is obtained;
- a shaping (or forming) step, wherein the paste is worked in order to give it a shape, for example that of a slab. The shape of the shaped object substantially corresponds to the shape of the cross-linked object which is subsequently obtained from cross-linking. In particular a mould, in which the paste is positioned, is used for shaping;
- a cross-linking step, wherein the shaped object is heated to a cross-linking temperature and wherein the temperature is kept for a time interval, that is to say, for a heating time interval. This step takes place under pressure, that is to say, a pressure is applied to the shaped object. The cross-linking agent promotes formation of bonds between casein macromolecules, thereby creating a cross-linked structures of casein macromolecules. In other words, the cross-linked polymeric material derived from casein is formed;
- a drying step, wherein the cross-linked object is left to dry in order to release the residual water contained in it.

The object obtained in this way may subsequently be mechanically worked, with the removal of material, in order to obtain a product having the desired shape and dimensions.

Between the shaping step and the cross-linking step there may be a pressing step, at room temperature, wherein a pressure is applied to the formed object. In particular the pressure is the same as applied in the cross-linking step and it is essentially a preparatory step for compacting the paste before cross-linking begins.

As regards the casein as a basic material, several experiments were carried out using powdered micellar casein, whilst other experiments were carried out using rennet casein, also powdered.

For the purpose of providing complete information, it should be noticed that micellar casein is essentially casein in the natural form, whilst rennet casein is casein treated with rennet enzyme (chymosin or rennin) in order to cut from the k-casein chains the end parts which ensure the stability of the casein micelles in milk. In other words, in rennet casein the hydrophobic parts of the k-casein have been enzymatically removed.

In any case, it should be noticed that micellar casein and rennet casein are commercial products easily found on the market and therefore there is no need to further define their characteristics, which may be considered substantially standardised characteristics. Specifically, rennet casein supplied by the company "Fontana Enzo Srl" of Sarmato (Piacenza), Italy, was used.

Compared with micellar casein, rennet casein has greater miscibility with water and it provided better results in the experiments carried out. Therefore, rennet casein is the preferred starting material and hereinafter in the description the term "casein" will refer to rennet casein, unless otherwise indicated. However, it shall be understood that the processes according to this invention are also applicable to another type of casein, in particular to micellar casein.

The experiments carried out related to possible cross-linking agents to be used, with the aim of avoiding use of formaldehyde which is used in the prior art processes.

A first class of cross-linking agents which proved effective is that of free-radical generating compounds, in particular by heating.

For example, this first class includes peroxides and persulphates, such as sodium persulphate, potassium persulphate and ammonium persulphate. Use of compounds which are water-soluble is preferable. The ones indicated above are water-soluble.

The casein cross-linking mechanism based on these free-radical generating compounds, essentially, is started by initiators which are free radicals deriving from decomposition of the compound itself and which are capable of promoting direct cross-linking between the casein macromolecules, those macromolecules bonding to each other directly without interposed spacer groups.

The initiators form radicals on the casein macromolecules by removing hydrogen atoms at different points of the macromolecules; the radicals formed in this way may recombine to create bonds between casein chains formed by the macromolecules. The number of such bonds may be modulated by acting on the concentration of cross-linking agent in the mixture.

For example, considering a peroxide with the formula Z-O-O-Z, the cross-linking mechanism is as follows:

*Z-O-O-Z* → *2 Z-O·*

*Z-O·* + *Casein-H* → *Casein·* + *Z-OH*

*Casein·*+ *Casein·* → *Casein-Casein* → →... *the reaction continues until a cross-linked structure of casein macromolecules is formed.*

Basically, that results in a casein-derived cross-linked polymeric material, in which crosslinks between casein macromolecules have been obtained by abstracting hydrogen atoms from the casein macromolecules by means of free radicals.

In particular, in the experiments carried out the sodium persulphate (Na₂S₂O₈) and the potassium persulphate (K₂S₂O₈) gave the best results.

A second class of cross-linking agents which proved effective is that of epoxide compounds having two or more epoxide groups. This second class of cross-linking agents may include both aliphatic compounds and aromatic compounds.

An example of an aliphatic di-epoxide which was used is neopentyl glycol diglycidyl ether (hereinafter indicated by the acronym NPGDGE), whose chemical structural formula is shown below:

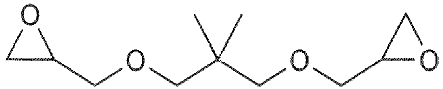

An example of aliphatic poly-epoxide usable is expoxidised soybean oil, whose chemical structural formula is shown below:

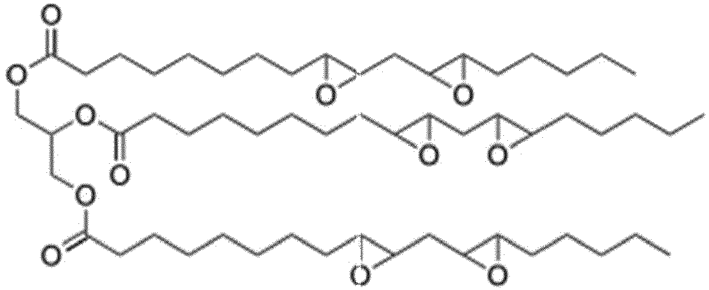

An example of aromatic di-epoxide usable is bisphenol A diglycidyl ether (acronym: DGEBA), whose chemical structural formula is shown below:

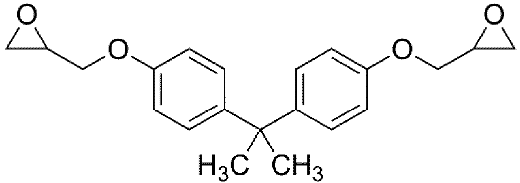

The epoxide groups are suitable for reacting with the terminal groups (such as amine groups and carboxyl groups) of the amino acids present in the casein macromolecules, thereby creating inter-chain bonds which involve the side chains of the casein macromolecules.

The process may be carried out in an aqueous medium, but a limited solubility of the epoxide in water is sufficient, because the conversion rate allows the reaction to be brought to completion.

In slightly alkaline conditions, the epoxide group X reacts with the salified carboxyl groups COO⁻, a considerable number of which are present in the casein: in the casein macromolecules the glutamic acid and the aspartic acid as a whole add up to approximately 25% and therefore there could be a crosslink every four amino acid residues.

A diagram of the cross-linking mechanism is as follows:

*Casein-COO⁻ + X-R-X* → *Casein-COO-X*-R-X*

*Casein-COO-X*-R-X + X-R-X* → *Casein-COO-X*-R-X*-OOC-Casein* → →... *the reaction continues until a cross-linked structure is formed.*

In acidic conditions, the reaction proceeds preferentially with the amino groups of lysine and the like. A slower reaction involving all of the groups may occur in a neutral medium.

Basically, the reaction with the epoxide having two epoxide groups creates crosslinks between casein macromolecules: the first epoxide group bonds to a first casein macromolecule and the second epoxide group bonds to a second casein macromolecule, whilst the rest of the molecule of the epoxide remains as a bridge between the two macromolecules.

In particular, in the experiments carried out the NPGDGE showed more satisfactory results than the DGEBA. Thanks to the aliphatic structure, the NPGDGE has a more flexible molecule because it is free to rotate around the bonds, whilst the DGEBA has a more rigid structure due to the aromatic rings. In some cases, cross-linking with DGEBA resulted in a material more fragile than what was obtained with NPGDGE.

The experiments carried out identified two ways as being particularly effective:
- use of a cross-linking agent belonging to the first class of cross-linking agents, that is to say, use of a free-radical generating compound;
- use of a cross-linking agent belonging to the first class of cross-linking agents and of a cross-linking agent belonging to the second class of cross-linking agents, that is to say, combined use of a free-radical generating compound and of an epoxide compound having two or more epoxide groups.

The steps of the process are now described in more detail, with reference numbers relating to the schematic representation in Figure 1.

As regards the quantities to be used in the mixing step (indicated with reference number 1): the quantity of water has a weight of between 5% and 40% of the casein's weight, more in particular between 15% and 25% of the casein's weight; the quantity of the at least one cross-linking agent has a weight of between 0.1% and 15% of the casein's weight, in particular between 4% and 10%. The quantity indicated for the cross-linking agent is understood as a total value, that is to say, as the sum of the quantities of the individual cross-linking agents in the event of combined use. In the event of combined use, the weight ratio between epoxide and free-radical generator (that is to say, the weight-based ratio between the quantity of epoxide and the quantity of free-radical generator) is less than 5, in particular is between 0.5 and 4.

Preferably, first an aqueous mixture is prepared in which the cross-linking agent 13 (or the cross-linking agents) is mixed with the required quantity of water 12. If the cross-linking agent is soluble in water, an aqueous solution is obtained.

Then the casein 11 and the aqueous mixture (or aqueous solution) containing the cross-linking agent 13 are mixed. For example, that is done in a container 14 using a mixer 15 with a speed of rotation of between 50 and 300 revolutions per minute, in particular between 100 and 150 revolutions per minute. In order to achieve more thorough mixing, the aqueous mixture or solution may be added to the casein 11 in the container 14 gradually during the mixing step, that is to say, in portions which are added one after another rather than all of it straight away.

The mixing step 1 may last for example for between 5 and 20 minutes and is carried out at room temperature.

Basically, the mixing step 1 leads to a substantially homogeneous condition of the mixture, in which all of the aqueous phase has been absorbed by the casein powder and a mixture 10 having a pasty consistency has been obtained, as a mixture. In other words, it is a paste.

Alternatively to what is described above, the cross-linking agent 13 could be added directly to the casein 11 in the mixing container 14 rather than being pre-mixed with the water 12.

At the end of the mixing step 1 there may be a sieving step in order to make the particle size of the paste 10 uniform, in particular in order to have a particle size within the 0.5 - 2.0 mm diameter range. This sieving step may be useful for eliminating any lumps which could remain in the paste if mixing is not completely homogeneous. However, this step may be avoided if the equipment used for the mixing step 1 is suitable for achieving homogeneous mixing, without lumps having dimensions greater than the particle size range indicated above. The aim is to obtain a homogeneous paste 10.

In the subsequent shaping step (indicated with reference number 2), for example a mould is used to give a shape to the paste 10, obtaining a shaped object 20 (but still pasty). Advantageously the shaped object 20 is substantially shaped into a slab, that is to say, with two parallel flat faces, because that shape can easily be compressed and compacted in a press in the subsequent steps. Basically, the paste 10 is pressed between two surfaces.

For example the paste 10 is positioned sandwich-like between two sheets 21, 22 of Teflon (that is to say, of polytetrafluoroethylene), which cover the surface of the mould and make contact with the press. The mould has lateral walls (not shown) which laterally contain the paste 10.

The thickness of the slab of shaped object 20 (that is to say, the distance between the two parallel flat faces) may be selected according to requirements. For example it may be within the range between 3 mm and 20 mm. In an example of application for making buttons for items of clothing, the thickness of the slab is 8 mm.

The shaping (or forming) may take place for example in a press or in a calender.

As regards the shaping step 2 it should be noticed that the shape given to the paste 10 in the shaping step 2 essentially corresponds to the shape of the object of cross-linked material which will be obtained later, at the end of the cross-linking. Since that cross-linked material is rigid and not very deformable, it is essentially workable by material removal. Therefore, it is evident that the surface extent and the thickness of the shaped object 20 must be selected also taking into account the dimensions of the finished product to be obtained. The shaped object 20 (in particular the system comprising the mould and the paste 10 contained in it) is subjected to pressing (indicated with reference number 3).

For example, it is put in a press 31 and is kept at a pressure greater than 20 bar, in particular greater than 150 bar, even more in particular between 250 bar and 450 bar. The press 31 acts on the two parallel flat faces of the shaped object 20, essentially pressing the thickness of the shaped object 20. The mould is not shown in the figure, but is also present in the press to laterally contain the object 20 during the pressing.

The pressing step 3 takes place at room temperature. The pressing is continued for a time interval of between 1 and 12 hours, preferably between 1 and 3 hours.

The pressing of the shaped object 20 allows the casein to be compacted and therefore allows the macromolecules to be moved towards each other. That is useful for promoting more extensive cross-linking and for reducing the risk that remaining inside the material there are zones which are not very cross-linked or there are spaces which could constitute "pockets" in which water or other solvents could remain absorbed during use of the finished product. Therefore, the use of very high pressures appears to be advantageous for the purposes of the compactness and the stability of the material obtained at the end of the process.

In the cross-linking step (indicated with reference number 4), the shaped (and pressed) object 20 is heated to a temperature which for example is between 50°C and 120°C (in particular, between 70°C and 90°C) and is kept at that temperature for a time interval of between 2 and 16 hours, in particular between 6 and 9 hours. At this temperature (which essentially is a reaction temperature or cross-linking temperature), the free-radical generating compound decomposes and forms free radicals, which cross-link the casein macromolecules according to the reaction mechanism illustrated above. Essentially, the free radical generator is "activated" at the temperature of the cross-linking step.

If there is also an epoxide compound present as a cross-linking agent, the cross-linking by means of the free-radical generator and the cross-linking by means of the epoxide proceed in parallel.

Therefore, the temperature to which the shaped object 20 is heated, is also selected based on the cross-linking agent which is used. The time interval is selected to be long enough to give time to the cross-linking to involve the entire mass of the shaped object 20.

The cross-linking step 4 also takes place under pressure, that is to say, with the shaped object 20 held pressed as in the pressing step 3. In particular the pressure in the cross-linking step 4 is the same as in the pressing step 3. For example, the pressing step 3 and the cross-linking step 4 are carried out in a press 31 which is a heating press, in which the heating is activated after the time required for the pressing step 3 has elapsed. Reference number 41 in Figure 1 schematically indicates an activated heating system.

In an alternative embodiment of the process, the pressing step 3 at room temperature might not be present and the heating and the pressing may be activated simultaneously.

At the end of the cross-linking step 4, the heating is switched off and the temperature of the object, which at this point is an object 50 of cross-linked polymeric material, is left to return to room temperature.

If necessary, the cross-linked object 50 is still held pressed for a time interval (for example of between 8 and 60 hours, preferably between 10 and 48 hours), at room temperature, that is to say, a pressing step 5 of pressing the cross-linked object 50 is carried out. This may take place in the same press 31 and at the same pressure used for the cross-linking step 4, but with the heating system 41 switched off. The pressing step 5 of pressing the cross-linked object 50 is useful for eliminating the excess water, at the same time preserving the flat shape of the cross-linked object 50, that is to say, without the slab deforming.

Finally, the cross-linked object 50 is removed from the mould and is left to dry. In that drying step 6, the cross-linked object 50 is left exposed to the air (or to an atmosphere suitable for speeding up drying, such as dried air or heated air or other gas) in order to release the residual water contained in it. For example, the cross-linked object 50 is left exposed to the air at room temperature for a period of time of between 24 and 48 hours.

The cross-linked object 50 may then be heated in a heater 61 (or another apparatus with a heated chamber), for example at a temperature of between 40°C and 70°C (preferably between 45°C and 55°C), for a period of time of between 2 hours and 12 hours, until the cross-linked object 50 reaches a constant weight. Reaching of the constant weight is assessed for example by performing successive weighing operations of the object 50, at time intervals during the period of drying in the heater 61, until no further perceptible weight reduction is noticed. Although the heater 61 speeds up the drying, this could be carried out by just leaving the cross-linked object 50 exposed to the air for a long enough time.

Basically, the drying of the cross-linked object 50 is carried out by leaving it exposed in air or in an atmosphere at room temperature and/or putting it in a heated environment (in particular in a heater).

Even during the drying step 6 the cross-linked object 50 may be kept under pressure in order to prevent it from deforming. For example, a suitable heavy body may be placed on the cross-linked object 50 in order to prevent its slab shape from deforming. The pressure applied in the drying step 6 may be noticeably less than that of the preceding pressing steps, for example it may be a relative pressure of less than 1 bar or even less than 0.1 bar.

When the constant weight has been reached, the object 50 may be considered dried and the material production process is ended: an object 50 of casein-derived cross-linked polymeric material has been obtained. The experiments carried out showed that the process produces a material which is rigid and mechanically workable and which in particular has properties very similar to those of Galalith. Basically, the material obtained is a biopolymer cross-linked resin.

The object 50 obtained may be subjected to mechanical working operations (in particular with material removal) in order to obtain products made of that material and having the required shape.

For example, a slab-shaped object 50 (8 mm thick) of material obtained from the process was cut into pieces which, according to known mechanical working operations, were turned, milled, drilled and polished to obtain buttons 70 for items of clothing. Those buttons 70, which are part of this invention, are therefore made of a cross-linked polymeric material which is derived from casein and has mechanical and aesthetic properties similar to Galalith, but is completely free of formaldehyde and does not require the use of formaldehyde (or other aldehyde or dialdehyde) to make it.

Below are three examples of the process according to this invention.

### Example 1

An aqueous solution was prepared by mixing 1.6 g of potassium persulphate and 5.2 g of neopentyl glycol diglycidyl ether in 16 ml of water.

80 grams of (powdered) rennet casein were thoroughly mixed with that aqueous solution. The quantitative ratios relative to the casein are therefore: water, 20% of the weight; potassium persulphate, 2% of the weight; neopentyl glycol diglycidyl ether, 6.5% of the weight.

The mixing was performed at room temperature in an agitator with speed of rotation of 50 revolutions per minute. The mixing continued until the product reached a substantially homogeneous condition, in which the entire aqueous phase had been absorbed by the casein powder and a pasty mass was obtained.

The product was passed through a sieve (with 1.5 mm mesh size) in order to have a substantially uniform particle size.

The product was then placed in a mould, between two Teflon sheets, and pressed in a press at 200 bar for 2 hours, at room temperature. The thickness of the pressed product was 8 mm.

While maintaining the pressure, the product was then heated to 80°C and kept at this temperature for 8 hours. The operating pH was the natural pH of casein, that is to say, around 6.6.

At the end of this heating step under pressure, the product was kept pressed at the same pressure as indicated above, but at room temperature, for 20 hours. The product was then removed from the mould (and from the press) and was left in the air at room temperature for 24 hours, then heated in a heater for 6 hours at a temperature of 55°C, until it had dried and reached a constant weight.

The product was worked in order to obtain a button 70, in particular having a 22.9 mm diameter and 4.8 mm thickness.

Mechanical tests on the button 70, which were carried out in accordance with section 4 *"*Determination of strength" of "British Standard - Methods of test for Buttons" No. BS4162:1983 (ISBN 0 580 11931 9) showed that the button 70 obtained from the process has a mean ultimate tensile strength value of 221 N.

### Example 2.

An aqueous solution was prepared by mixing 6.4 g of sodium persulphate in 16 ml of water.

80 grams of (powdered) rennet casein were thoroughly mixed with that aqueous solution. The quantitative ratios relative to the casein are therefore: water, 20% of the weight; sodium persulphate, 8% of the weight.

The mixing was performed in the same way as described for Example 1, as was the subsequent sieving.

Using the same equipment as for Example 1, the product, having been placed in the mould, was pressed at 300 bar initially at room temperature for 2 hours, then at a temperature of 80°C for 8 hours. The operating pH was the natural pH of casein.

At the end of the heating step under pressure, the product was kept pressed at the same pressure as indicated above, but at room temperature, for 20 hours. The drying step was performed as in Example 1.

The mean ultimate tensile strength value, for a button 70 with the same dimensions as in Example 1 and measured according to the same standard, was 229 N.

### Example 3

An aqueous solution was prepared by mixing 3.2 g of potassium persulphate and 3.2 g of bisphenol A diglycidyl ether in 16 ml of water.

80 grams of (powdered) rennet casein were thoroughly mixed with that aqueous solution. The quantitative ratios relative to the casein are therefore: water, 20% of the weight; potassium persulphate, 4% of the weight; bisphenol A diglycidyl ether, 4% of the weight.

The mixing was performed in the same way as described for Example 1, as was the subsequent sieving.

Using the same equipment as for Example 1, the product, having been placed in the mould, was pressed at 300 bar initially at room temperature for 2 hours, then at a temperature of 80°C for 8 hours. The operating pH was the natural pH of casein.

At the end of the heating step under pressure, the product was kept pressed at the same pressure as indicated above, but at room temperature, for 20 hours. The drying step was performed as in Example 1.

The mean ultimate tensile strength value, for a button 70 with the same dimensions as in Example 1 and measured according to the same standard, was 259 N.

The process and the examples given above have been described with reference to making a button, however, they may be used to produce other articles, such as: clasps; buckles; small plates; knot covers; string stoppers; handles; zip pulls; eyelets; other articles in the fashion sector. These articles are in the clothing sector and in particular are intended to be applied to an item of clothing. That does not mean that the process and the articles obtained are limited to the clothing sector. For example, spectacle frames are amongst the articles which can be made of the material obtained by means of the process described.

To summarize what described above, the invention allows to avoid the use of formaldehyde (or other aldehydes) to cross-link the casein, while adopting a cross-linking process in which water is present as a process aid. The cross-linking can be carried out using suitable hydro-compatible reagents that allow to create a structure of transversal bonds between the casein macromolecules, with a distributed modulation as it was obtained in the process using formaldehyde.

In particular, two reagents have been selected: those are cross-linking agents also in the aqueous phase and have different cross-linking mechanisms, which do not interfere with each other and create bonds with different functional groups of the casein macromolecules. From a geometrical point of view, short bridges are formed between methylene groups of the main chain (backbone) of casein macromolecules and long bridges are formed, consisting of about 8 to 20 atoms and involving functional groups of the side chains.

The final result is a material consisting of casein 90 to 98% by weight and having application performance substantially identical to Galalith, but obtained through a process which is environmentally compatible.

It should be noticed that this invention is relatively easy to make and that even the cost linked to implementing it is not very high.

The invention described above may be modified and adapted in several ways without thereby departing from the scope of the inventive concept as defined in the claims below.

The shapes and dimensions of the various components, may vary according to requirements.

## Claims

1. Casein cross-linking process for obtaining a casein-derived cross-linked polymeric material, comprising the steps of:
- mixing casein (11) with water (12) and with at least one cross-linking agent (13) to obtain a paste (10);
- shaping the paste (10) to give it a shape, in particular a shape of a slab, to obtain a shaped object (20);
- heating the shaped object (20) to a cross-linking temperature and keeping heated for a heating time interval, wherein during the heating time interval the shaped object (20) is subjected to pressing and, at the cross-linking temperature and during the heating time interval, the at least one cross-linking agent (13) promotes formation of bonds between casein macromolecules to obtain an object (50) of cross-linked polymeric material which is formed by a cross-linked structure of casein macromolecules;
- leaving the object (50) of cross-linked polymeric material to dry;
**characterised in that** said at least one cross-linking agent (13) is a free-radical generating compound.

2. Casein cross-linking process according to claim 1, wherein the quantity of water (12) mixed in with the casein (11) has a weight of between 5% and 40% of casein's weight, in particular between 15% and 25% of the casein's weight, and
wherein the quantity of the at least one cross-linking agent (13) mixed in with the casein (11) has a weight of between 0.1% and 15% of the casein's weight, in particular between 4% and 10% of the casein's weight.

3. Casein cross-linking process according to claim 1 or 2, wherein the casein (11) is rennet casein, in particular powdered rennet casein.

4. Casein cross-linking process according to any of claims 1 to 3, wherein the free-radical generating compound is a peroxide or a persulphate, in particular the free-radical generating compound is sodium persulphate or potassium persulphate.

5. Casein cross-linking process according to any of claims 1 to 4, wherein a first cross-linking agent is a free-radical generating compound and a second cross-linking agent is an epoxide compound having two or more epoxide groups.

6. Casein cross-linking process according to claim 5, wherein the epoxide compound having two or more epoxide groups is neopentyl glycol diglycidyl ether or bisphenol A diglycidyl ether.

7. Casein cross-linking process according to claim 5 or 6, wherein, in the step of mixing casein (11) with water (12) and at least one cross-linking agent (13), the quantity of epoxide compound and the quantity of free-radical generating compound have a weight-based ratio between each other which is less than 5, in particular is between 0.5 and 4.

8. Casein cross-linking process according to any of claims 1 to 7, wherein the cross-linking temperature is between 50°C and 120°C, in particular between 70°C and 90°C, and wherein the heating time interval is between 2 and 16 hours, in particular between 6 and 9 hours.

9. Casein cross-linking process according to any of claims 1 to 8, wherein the step of heating the shaped object (20) is preceded by a step of pressing at room temperature in which the shaped object (20) is subjected to pressing for a pressing time interval, the pressing time interval being in particular between 1 hour and 12 hours, even more in particular between 1 hour and 3 hours,
and/or
wherein the step of heating the shaped object (20) is followed by a step of pressing at room temperature in which the object (50) of cross-linked polymeric material is subjected to pressing for a pressing time interval, the pressing time interval being in particular between 8 hours and 60 hours, even more in particular between 20 hours and 48 hours.

10. Casein cross-linking process according to any of claims 1 to 9, wherein, during pressing, the object (20; 50) is subjected to a pressure of more than 20 bar, in particular to a pressure of more than 150 bar, even more in particular to a pressure of between 250 bar and 450 bar.

11. Cross-linked polymeric material obtainable through the process according to any of claims 1 to 10.

12. Cross-linked polymeric material according to claim 11, wherein crosslinks between casein macromolecules have been obtained by abstracting hydrogen atoms from the casein macromolecules by means of free radicals,
wherein further crosslinks between casein macromolecules have been obtained through reactions with at least one epoxide compound having at least two epoxide groups, and
wherein the cross-linked polymeric material is a substantially rigid material that is mechanically workable by cutting, milling, turning and drilling.

13. An article, made of the cross-linked polymeric material according to claim 11 or 12.

14. The article according to claim 13, wherein the article is a spectacle frame or wherein the article is intended to be applied to an item of clothing and is one of the following articles: a button; a clasp; a buckle; a small plate; a knot cover; a string stopper; a handle; a zip pull; an eyelet.

## Patentansprüche

1. Kaseinvernetzungsverfahren, um ein kaseinabgeleitetes, vernetztes Polymer zu erhalten, folgende Schritte beinhaltend:
- Kasein (11) mit Wasser (12) und mit mindestens einem Vernetzungsmittel (13) vermischen, um eine Paste (10) zu erhalten;
- die Paste (10) formen, um ihr eine Form zu geben, im Besonderen die Form einer Platte, um ein geformtes Objekt (20) zu erhalten;
- das geformte Objekt (20) auf eine Vernetzungstemperatur erhitzen und es über einen Heizzeitraum erhitzt zu halten, wobei während des Heizzeitraums das geformte Objekt (20) einem Pressvorgang unterzogen wird und bei der Vernetzungstemperatur und während des Heizzeitraums das mindestens eine Vernetzungsmittel (13) die Bildung von Verbindungen zwischen Kasein-Makromolekülen fördert, um ein Objekt (50) aus vernetztem Polymer zu erhalten, das aus einer vernetzten Struktur von Kasein-Makromolekülen besteht;
- das Objekt (50) aus vernetztem Polymer trocknen lassen;
**dadurch gekennzeichnet, dass** besagtes, mindestens ein Vernetzungsmittel (13) eine freie Radikale erzeugende Verbindung ist.

2. Kaseinvernetzungsverfahren nach Anspruch 1, wobei die Menge an Wasser (12), das in das Kasein (11) gemischt wird, ein Gewicht zwischen 5% und 40% des Kaseingewichts hat, im Besonderen zwischen 15% und 25% des Kaseingewichts, und
wobei die Menge des mindestens einen Vernetzungsmittels (13), das in das Kasein (11) gemischt wird, ein Gewicht zwischen 0,1% und 15% des Kaseingewichts hat, im Besonderen zwischen 4% und 10% des Kaseingewichts.

3. Kaseinvernetzungsverfahren nach Anspruch 1 oder 2, wobei das Kasein (11) Labkasein ist, im Besonderen pulverförmiges Labkasein.

4. Kaseinvernetzungsverfahren nach einem der Ansprüche 1 bis 3, wobei die freie Radikale erzeugende Verbindung ein Peroxid oder ein Persulfat ist, im Besonderen ist die freie Radikale erzeugende Verbindung Natriumpersulfat oder Kaliumpersulfat.

5. Kaseinvernetzungsverfahren nach einem der Ansprüche 1 bis 4, wobei ein erstes Vernetzungsmittel eine freie Radikale erzeugende Verbindung ist und ein zweites Vernetzungsmittel eine Epoxidverbindung ist, die dabei zwei oder mehr Epoxidgruppen hat.

6. Kaseinvernetzungsverfahren nach Anspruch 5, wobei die Epoxidverbindung, die zwei oder mehr Epoxidgruppen hat, Neopentylglycoldiglycidylether oder Bisphenol-A-diglycidylether ist.

7. Kaseinvernetzungsverfahren nach Anspruch 5 oder 6, wobei bei dem Schritt des Vermischens von Kasein (11) mit Wasser (12) und mindestens einem Vernetzungsmittel (13) die Menge der Epoxidverbindung und die Menge der freie Radikale erzeugenden Verbindung ein Gewichtsverhältnis zueinander haben, das kleiner als 5 ist, im Besonderen zwischen 0,5 und 4 liegt.

8. Kaseinvernetzungsverfahren nach einem der Ansprüche 1 bis 7, wobei die Vernetzungstemperatur zwischen 50°C und 120°C liegt, im Besonderen zwischen 70°C und 90°C, und wobei der Heizzeitraum zwischen 2 und 16 Stunden beträgt, im Besonderen zwischen 6 und 9 Stunden.

9. Kaseinvernetzungsverfahren nach einem der Ansprüche 1 bis 8, wobei dem Schritt des Erhitzens des geformten Objekts (20) ein Schritt des Pressens bei Raumtemperatur vorausgeht, bei dem das geformte Objekt (20) einem Pressvorgang über einen Presszeitraum unterzogen wird, der Presszeitraum liegt dabei im Besonderen zwischen 1 und 12 Stunden, noch weiter im Besonderen zwischen 1 und 3 Stunden,
und/oder
wobei auf den Schritt des Erhitzens des geformten Objekts (20) ein Schritt des Pressens bei Raumtemperatur folgt, bei dem das Objekt (50) aus vernetztem Polymer einem Pressvorgang über einen Presszeitraum unterzogen wird, der Presszeitraum liegt dabei im Besonderen zwischen 8 Stunden und 60 Stunden, noch weiter im Besonderen zwischen 20 Stunden und 48 Stunden.

10. Kaseinvernetzungsverfahren nach einem der Ansprüche 1 bis 9, wobei das Objekt (20; 50) während des Pressvorgangs einem Druck von mehr als 20 bar ausgesetzt wird, im Besonderen einem Druck von mehr als 150 bar, noch weiter im Besonderen einem Druck zwischen 250 bar und 450 bar.

11. Vernetztes Polymer, das durch das Verfahren nach einem der Ansprüche 1 bis 10 erhalten werden kann.

12. Vernetztes Polymer nach Anspruch 11, wobei Vernetzungen zwischen Kasein-Makromolekülen durch Abspaltung von Wasserstoffatomen von den Kasein-Makromolekülen mithilfe freier Radikaler erhalten wurden, wobei weitere Vernetzungen zwischen Kasein-Makromolekülen durch Reaktionen mit mindestens einer Epoxidverbindung, die dabei mindestens zwei Epoxidgruppen hat, erhalten wurden, und
wobei das vernetzte Polymer ein im Wesentlichen starres Material ist, das mechanisch durch Schneiden, Fräsen, Drehen und Bohren verarbeitbar ist.

13. Ein Artikel, der aus dem vernetzten Polymer nach Anspruch 11 oder 12 hergestellt ist.

14. Der Artikel nach Anspruch 13, wobei der Artikel eine Brillenfassung ist oder wobei der Artikel dazu vorgesehen ist, an ein Kleidungsstück angebracht zu werden und einer der folgenden Artikel ist: ein Knopf; eine Schließe; eine Schnalle; eine kleine Platte; eine Knotenabdeckung; ein Kordelstopper; ein Bügel; ein Reißverschluss-Schieber; eine Öse.

## Revendications

1. Procédé de réticulation de caséine pour obtenir un matériau polymère réticulé dérivé de la caséine, comprenant les étapes consistant à :
- mélanger de la caséine (11) avec de l'eau (12) et avec au moins un agent de réticulation (13) pour obtenir une pâte (10) ;
- modeler la pâte (10) pour lui donner une forme, en particulier une forme de plaque, pour obtenir un objet modelé (20) ;
- chauffer l'objet modelé (20) à une température de réticulation et maintenir le chauffage pendant un intervalle de temps de chauffage, dans laquelle, pendant l'intervalle de temps de chauffage, l'objet modelé (20) est soumis à pressage et, à la température de réticulation et pendant l'intervalle de temps de chauffage, ledit au moins un agent de réticulation (13) promeut la formation de liaisons entre macromolécules de caséine pour obtenir un objet (50) de matériau polymère réticulé qui est formé d'une structure réticulée de macromolécules de caséine ;
- laisser sécher l'objet (50) de matériau polymère réticulé ;
**caractérisé en ce que** ledit au moins un agent réticulé (13) est un composé générateur de radicaux libres.

2. Procédé de réticulation de caséine selon la revendication 1, dans lequel la quantité d'eau (12) mélangée avec la caséine (11) a un poids compris entre 5% et 40% du poids de la caséine, en particulier entre 15% et 25% du poids de la caséine, et
dans lequel la quantité dudit au moins un agent de réticulation (13) mélangé avec la caséine (11) a un poids compris entre 0,1% et 15% du poids de la caséine, en particulier entre 4% et 10% du poids de la caséine.

3. Procédé de réticulation de caséine selon la revendication 1 ou 2, dans lequel la caséine (11) est de la caséine présure, en particulier de la caséine présure en poudre.

4. Procédé de réticulation de caséine selon l'une quelconque des revendications de 1 à 3, dans lequel le composé générateur de radicaux libres est un peroxyde ou un persulfate, en particulier le composé générateur de radicaux libres est le persulfate de sodium ou le persulfate de potassium.

5. Procédé de réticulation de caséine selon l'une quelconque des revendications de 1 à 4, dans lequel un premier agent de réticulation est un composé générateur de radicaux libres et un deuxième agent de réticulation est un composé époxyde ayant deux ou plus groupes époxyde.

6. Procédé de réticulation de caséine selon la revendication 5, dans lequel le composé époxyde ayant deux ou plus groupes époxyde est l'éther diglycidylique de néopentylglycol ou l'éther diglycidylique de bisphénol A.

7. Procédé de réticulation de caséine selon la revendication 5 ou 6, dans lequel, lors de l'étape de mélange de la caséine (11) avec de l'eau (12) et au moins un agent de réticulation (13), la quantité de composé époxyde et la quantité de composé générateur de radicaux libres ont un rapport en poids, entre elles, qui est inférieur à 5, en particulier compris entre 0,5 et 4.

8. Procédé de réticulation de caséine selon l'une quelconque des revendications de 1 à 7, dans lequel la température de réticulation est comprise entre 50°C et 120°C, en particulier entre 70°C et 90°C, et dans lequel l'intervalle de temps de chauffage est compris entre 2 et 16 heures, en particulier entre 6 et 9 heures.

9. Procédé de réticulation de caséine selon l'une quelconque des revendications de 1 à 8, dans lequel l'étape de chauffage de l'objet modelé (20) est précédée d'une étape de pressage à température ambiante au cours de laquelle l'objet modelé (20) est soumis à pressage pendant un intervalle de temps de pressage, l'intervalle de temps de pressage étant en particulier compris entre 1 heure et 12 heures, encore plus particulièrement entre 1 heure et 3 heures, et/ou
dans lequel l'étape de chauffage de l'objet modelé (20) est suivie d'une étape de pressage à température ambiante au cours de laquelle l'objet (50) de matériau polymère réticulé est soumis à pressage pendant un intervalle de temps de pressage, l'intervalle de temps de pressage étant en particulier compris entre 8 heures et 60 heures, encore plus particulièrement entre 20 heures et 48 heures.

10. Procédé de réticulation de caséine selon l'une quelconque des revendications de 1 à 9, dans lequel, lors du pressage, l'objet (20 ; 50) est soumis à une pression de plus de 20 bar, en particulier à une pression de plus de 150 bar, encore plus particulièrement à une pression comprise entre 250 bar et 450 bar.

11. Matériau polymère réticulé pouvant être obtenu au moyen du procédé selon l'une quelconque des revendications de 1 à 10.

12. Matériau polymère réticulé selon la revendication 11, dans lequel des liaisons transversales entre macromolécules de caséine ont été obtenues par retrait d'atomes d'hydrogène des macromolécules de caséine au moyen de radicaux libres,
dans lequel d'autres liaisons transversales entre macromolécules de caséine ont été obtenues par des réactions avec au moins un composé époxyde ayant au moins deux groupes époxyde, et
dans lequel le matériau polymère réticulé est un matériau essentiellement rigide qui peut être travaillé mécaniquement par découpe, fraisage, tournage et perçage.

13. Article, réalisé avec le matériau polymère réticulé selon la revendication 11 ou 12.

14. Article selon la revendication 13, dans lequel l'article est une monture de lunettes ou dans lequel l'article est destiné à être appliqué sur un vêtement et est l'un des articles suivants: un bouton; un fermoir; une boucle; une petite plaque; un cache-nœud; un stoppeur de cordon; une poignée; une tirette de fermeture éclair; un oeillet.
